# FASCICULE DE BREVET EUROPEEN

(11) **EP 2 602 601 B1**
(45) Date de publication et mention de la délivrance du brevet: **21.10.2015**
(21) Numéro de dépôt: 12193457.4
(22) Date de dépôt: 20.11.2012
(51) Int. Cl.: G01M 13/02

(54) **Systeme de surveillance de chaine cinematique**
Überwachungssystem einer kinematischen Kette
System for monitoring a drive train

(30) Priorité: 09.12.2011 FR 1161427
(43) Date de publication de la demande: 12.06.2013
(73) Titulaire: Eiffage Construction Metallique, 92700 Colombes (FR)
(72) Inventeur: Siwula, Régis, 59163 CONDE SUR ESCAUT (FR); Servant, Remy, 92150 SURESNES (FR)
(74) Mandataire: Cabinet Plasseraud

(56) Documents cités:
- EP-A1- 1 116 665
- EP-A2- 0 430 297

## Description

La présente invention est relative aux systèmes de surveillance de chaîne cinématique. Plus particulièrement, ce type de système peut être utilisé par exemple pour sécuriser des treuils pour la manutention de charges.

Dans l'art antérieur, il est connu, par exemple du document US 6526816, un système de surveillance pour transmission de véhicule, en particulier pour détecter un vieillissement de la chaîne cinématique et un dysfonctionnement qui peut s'ensuivre. D'autres systèmes de l'art antérieur sont décrits dans les documents EP1116665 et EP0430297.

Cependant, un tel système ne permet pas d'assurer une détection immédiate d'un dysfonctionnement et un tel système n'est plus opérationnel en cas d'une défaillance dans le circuit de traitement.

La présente invention a pour but d'apporter au moins en partie une solution aux problèmes susmentionnés.

L'invention propose un système de surveillance pour surveiller une chaine cinématique comprenant un support, un arbre primaire monté pivotant sur le support autour d'un premier axe, un arbre secondaire monté pivotant sur le support autour d'un second axe et au moins une transmission reliant l'arbre primaire à l'arbre secondaire, le système de surveillance comprenant :
- au moins un premier capteur apte à délivrer au moins un des premiers signaux représentatifs au moins de la vitesse et du sens de rotation de l'arbre primaire,
- au moins un deuxième capteur apte à délivrer au moins un des deuxièmes signaux représentatifs au moins de la vitesse et du sens de rotation de l'arbre secondaire
- une première unité de surveillance apte à acquérir au moins deux des premier et deuxième signaux, apte à calculer les positions angulaires des arbres primaire et secondaire et à comparer les positions, vitesses et sens de rotation des arbres primaire et secondaire par rapport à des critères de bon fonctionnement prédéterminés et apte à commander au moins une première sortie dans un état de sécurité si les critères de bon fonctionnement ne sont pas respectés,

- une deuxième unité de surveillance apte à acquérir au moins deux des premier et deuxième signaux, apte à calculer les positions angulaires des arbres primaire et secondaire et à comparer les positions et vitesses de rotation des arbres primaire et secondaire par rapport aux critères de bon fonctionnement prédéterminés et apte à commander au moins une deuxième sortie dans un état de sécurité si les critères de bon fonctionnement ne sont pas respectés,
- un circuit de sortie, apte à acquérir lesdits première et deuxième sorties et à commander au moins une troisième sortie dans un état de mise en sécurité si au moins l'une des première et deuxième sorties est en état de sécurité, de sorte que la chaine cinématique peut être mise en état de sécurité si un dysfonctionnement a été détecté.

Grâce à ces dispositions, ledit système peut commander dans un temps maîtrisé une sortie de mise en sécurité en cas de dysfonctionnement de chaine cinématique. De plus, même si une des unités de surveillance vient à être défaillante, le système, du fait de sa redondance, permet tout de même d'activer rapidement une sortie de mise en sécurité en cas de dysfonctionnement de la chaine cinématique.

Dans divers modes de réalisation de l'invention, on peut éventuellement avoir recours en outre à l'une et/ou à l'autre des dispositions qui suivent.

Selon un aspect, un dysfonctionnement de la chaine cinématique est déclaré en cas de dépassement d'au moins un seuil de vitesse prédéterminé sur l'arbre primaire ou secondaire, et/ou en cas de désynchronisme des positions entre l'arbre primaire et l'arbre secondaire ; de sorte qu'un défaut de survitesse ou de désynchronisme provoque la mise de la chaine cinématique de la chaine cinématique en état de sécurité.

Selon un autre aspect, la transmission présente un rapport de transmission noté K, la position angulaire de l'arbre primaire est notée θ1, la position angulaire de l'arbre secondaire est notée θ2, et un désynchronisme est détecté si la valeur absolue de θ2-K.θ1 dépasse une valeur prédéterminée. Moyennant quoi le système de surveillance peut détecter dans un temps maîtrisé et sans incertitude un dysfonctionnement interne de la chaine cinématique.

Selon un autre aspect, les première et deuxième unités de commande sont aptes à acquérir des ordres de mouvements relatifs à une commande de motorisation de l'arbre primaire, de sorte qu'un dysfonctionnement de la chaine cinématique est déclaré en cas de dévirage statique (mouvement avec absence d'ordre), et/ou de dévirage dynamique (sens de mouvement incohérent avec l'ordre de mouvement).

Selon un autre aspect, les critères de bon fonctionnement prédéterminés sont basés sur au moins une table de paramètres représentant des caractéristiques de la chaine cinématique, ladite table de paramètres étant apte à être chargée par un utilisateur, de préférence un utilisateur averti, dans les première et deuxième unités de surveillance. Moyennant quoi le système de surveillance peut être adapté aux caractéristiques propres de la chaine cinématique à surveiller pour détecter dans un temps maîtrisé et sans incertitude un dysfonctionnement de la chaine cinématique.

Selon un autre aspect, le système de surveillance peut comprendre en outre un troisième capteur apte à délivrer un autre des premiers signaux représentatifs de la vitesse et du sens de rotation de l'arbre primaire et lu par la deuxième unité de surveillance, et un quatrième capteur apte à délivrer un autre des deuxièmes signaux représentatifs de la vitesse et du sens de rotation de l'arbre secondaire, et lu par la première unité de surveillance, de sorte qu'une défaillance d'un des capteurs ne dégrade pas la fonction de surveillance du système et la disponibilité de la machine.

Selon un autre aspect, les premier et deuxième capteurs sont du type codeur à impulsions permettant de mesurer la vitesse et de détecter le sens de rotation. Moyennant quoi le système de surveillance utilise des composants de captage non spécifiques et le coût du système de surveillance est modéré.

Selon un autre aspect, plusieurs seuils de survitesse peuvent être définis pour déterminer une condition de survitesse ; de sorte qu'on peut disposer de plusieurs niveaux de protection.

L'invention vise également un système de treuil pour la manutention de charges, avec une chaine cinématique comprenant un support, un arbre primaire monté pivotant sur le support autour d'un premier axe, un arbre secondaire monté pivotant sur le support autour d'un second axe, au moins une transmission reliant l'arbre primaire à l'arbre secondaire, et un système de surveillance tel que décrit précédemment, et comprenant en outre:
- un organe moteur accouplé à l'arbre primaire,
- un tambour accouplé audit arbre secondaire, ledit tambour étant destiné à recevoir au moins un câble de traction, dont une extrémité est attachée au tambour et l'autre extrémité pouvant être accrochée à une charge à lever,
- au moins un dispositif de frein apte à agir sur au moins un organe de frein lié à l'arbre primaire et/ou à l'arbre secondaire,
- la troisième sortie étant configurée pour commander le dispositif de frein à agir en cas de dysfonctionnement de la chaine cinématique.

Grâce à ces dispositions, le dispositif de frein peut être actionné en position de sécurité en cas de dysfonctionnement déclaré sur la chaine cinématique, afin notamment d'éviter toute chute de la charge à lever ou tout dommage.

Selon un autre aspect, le dispositif de frein est un frein à manque de courant, de sorte que la charge est stoppée en l'absence d'apport d'énergie sur le dispositif de frein.

Selon un autre aspect, le dispositif de frein comprend un premier frein apte à agir sur un premier organe de frein lié à l'arbre secondaire et un deuxième frein apte à agir sur un deuxième organe de frein lié à l'arbre primaire, la troisième sortie étant apte à commander simultanément le premier frein et le deuxième frein.

L'invention vise également un procédé pour surveiller une chaine cinématique comprenant un arbre primaire monté pivotant, un arbre secondaire monté pivotant, une transmission reliant l'arbre primaire à l'arbre secondaire, et un système de surveillance comprenant :
- au moins un premier capteur agencé sur l'arbre primaire,
- au moins un deuxième capteur agencé sur l'arbre secondaire,
- une première unité de surveillance,
- une deuxième unité de surveillance,
- un circuit de sortie,
le procédé comprenant les étapes:
/a1/ délivrer, au niveau du premier capteur, au moins un des premiers signaux représentatifs de la vitesse et du sens de rotation de l'arbre primaire,
/a2/ délivrer, au niveau du deuxième capteur, au moins un des deuxièmes signaux représentatifs de la vitesse et du sens de rotation de l'arbre secondaire,
/b1/ acquérir, au niveau de la première unité de surveillance au moins deux des premier et deuxième signaux, et calculer les positions angulaires des arbres primaire et secondaire,
/c1/ comparer, dans la première unité de surveillance, les positions et vitesses de rotation des arbres primaire et secondaire par rapport à des critères de bon fonctionnement prédéterminés,
/d1/ commander, par la première unité de surveillance, au moins une première sortie dans un état de sécurité si les critères de bon fonctionnement ne sont pas respectés,
/b2/ acquérir, au niveau de la deuxième unité de surveillance au moins deux des premier et deuxième signaux, et calculer les positions angulaires des arbres primaire et secondaire,
/c2/ comparer dans la deuxième unité de surveillance, les positions et vitesses de rotation des arbres primaire et secondaire par rapport à des critères de bon fonctionnement prédéterminés,
/d2/ commander, par la deuxième unité de surveillance, au moins une deuxième sortie dans un état de sécurité si les critères de bon fonctionnement ne sont pas respectés.
/e/ commander au moins une troisième sortie dans un état de mise en sécurité si au moins l'une des première et deuxième sorties est dans un état de sécurité.

Selon un autre aspect lié au procédé, aux étapes /d1/ et/ou /d2/, un dysfonctionnement de la chaine cinématique peut être déclaré en cas de dépassement d'au moins un seuil de vitesse prédéterminé sur l'arbre primaire ou secondaire, et/ou en cas de désynchronisme des positions entre l'arbre primaire et l'arbre secondaire. Moyennant quoi un défaut de survitesse ou de désynchronisme provoque la mise de la chaine cinématique en état de sécurité.

Selon un autre aspect, les première et deuxième unités de commande peuvent être aptes à acquérir des ordres de mouvements relatifs à une commande de motorisation de l'arbre primaire, de sorte qu'un dysfonctionnement de la chaine cinématique est déclaré en cas de dévirage statique, et/ou de dévirage dynamique.

Selon un autre aspect lié au procédé, plusieurs seuils de survitesse peuvent être définis pour déterminer une condition de survitesse ; de sorte que l'on peut avoir plusieurs niveaux de protection.

D'autres aspects, buts et avantages de l'invention apparaîtront à la lecture de la description suivante de modes de réalisation de l'invention, donnés à titre d'exemples non limitatifs. L'invention sera également mieux comprise en regard des dessins joints sur lesquels :
- la figure 1 illustre schématiquement une chaîne cinématique équipée de capteurs et surveillée par un système de surveillance de chaîne cinématique selon un mode de réalisation de l'invention,
- la figure 2 montre un schéma du système de surveillance de chaîne cinématique mis en oeuvre sur la chaîne cinématique de la figure 1,
- la figure 3 montre un graphique illustrant la détection de la condition de survitesse,
- la figure 4 montre un chronogramme illustrant la détection de la condition de désynchronisme,
- la figure 5 montre un chronogramme illustrant la détection des conditions de dévirage statique et dynamique,
- la figure 6 montre un système de treuil pour la manutention de charges selon un mode particulier de réalisation de l'invention,
- la figure 7 illustre un schéma du système de surveillance mis en oeuvre dans le système illustré sur la figure 6,
- la figure 8 représente les étapes d'un procédé mis en oeuvre selon l'invention.

Sur les différentes figures, les mêmes références désignent des éléments identiques ou similaires.

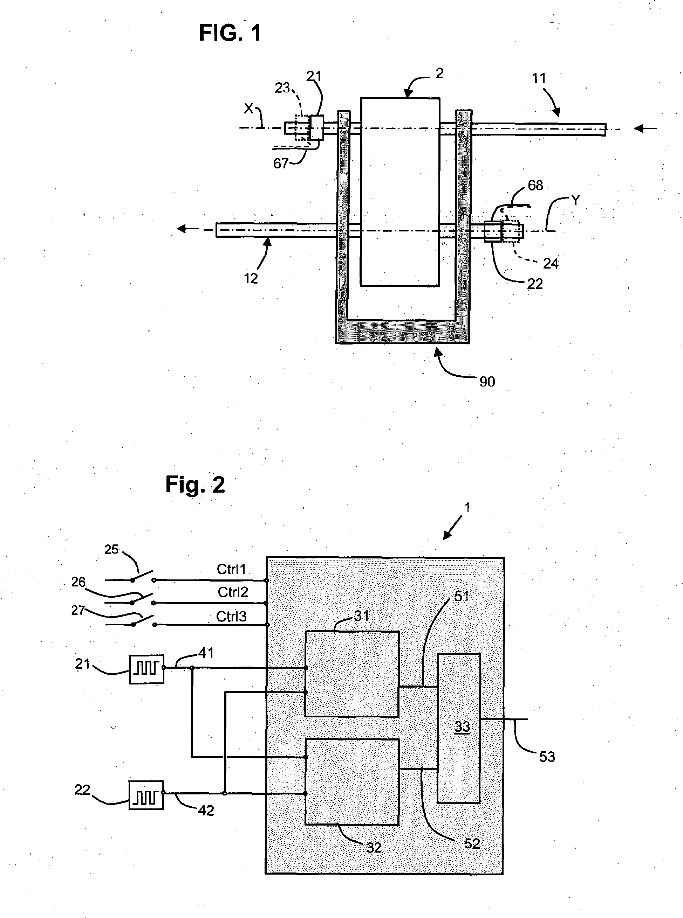

En référence à la Figure 1, il est présenté une chaine cinématique équipée de capteurs d'un système de surveillance. La chaine cinématique comprend un support **90,** un arbre primaire **11** monté pivotant sur le support autour d'un premier axe **X,** et un arbre secondaire **12** monté pivotant sur le support autour d'un second axe **Y.** Dans l'exemple illustré les axes X et Y sont parallèles mais ils pourraient être agencés différemment, par exemple perpendiculaires entre eux. Les arbres primaires et secondaires sont montés sur le support 90 de préférence au moyen de roulements. Le support 90 peut être par exemple un boitier fermé, un carter structurel, une embase ou tout autre organe ayant la fonction de support.

L'arbre primaire **11** peut aussi être considéré comme l'arbre d'entrée de la chaine cinématique et l'arbre secondaire **12** est alors considéré comme l'arbre de sortie de la chaine cinématique.

La chaine cinématique comprend en outre une transmission **2** qui relie l'arbre primaire **11** à l'arbre secondaire **12**. Cette transmission peut comprendre un ou plusieurs train(s) d'engrenages, et peut comprendre le cas échéant aussi un accouplement élastique ou embrayage. Le ou les train(s) d'engrenages peuvent être des engrenages de type parallèle, conique ou planétaire. L'accouplement élastique, s'il est présent, permet d'encaisser des changements rapides ou brutaux de la vitesse angulaire de l'un des arbres.

La transmission présente un rapport de transmission noté **K,** rapport entre la vitesse de sortie (arbre secondaire) et la vitesse d'entrée (arbre primaire).

Le système de surveillance comprend par ailleurs au moins un premier capteur **21** apte à délivrer au moins un premier signal **41** représentatif de la vitesse et du sens de rotation de l'arbre primaire 11. De plus, le système de surveillance comprend au moins un deuxième capteur **22** apte à délivrer au moins un deuxième signal **42** représentatif de la vitesse et du sens de rotation de l'arbre secondaire 12. Ces premier et deuxième capteurs **21,22** sont de préférence du type codeur à impulsions (aussi appelé 'codeur incrémental'). En particulier, on pourra choisir de préférence un type de codeur à impulsions permettant de détecter le sens de rotation, par exemple un codeur incrémental délivrant deux signaux décalés à 90° (i.e. en 'quadrature'). Ce type de codeur incrémental délivre des impulsions dont la fréquence est proportionnelle à la vitesse de déplacement de l'arbre en rotation. Chaque capteur peut comprendre deux rangées de repères, par exemple magnétiques ou optiques, par exemple plusieurs dizaines de repères par tour, ce qui permet de délivrer des signaux comportant un nombre important d'impulsions par tour. Ce type de capteur est relativement courant, fiable et peu onéreux.

En référence à la Figure 2, le système de surveillance **1** comprend par ailleurs une première unité de surveillance **31** apte à acquérir lesdits premier et deuxième signaux **41**, **42**.

Grâce à la lecture de ces signaux, en fonction de l'analyse de ces premier et deuxième signaux 41,42, la première unité de surveillance **31** peut alors calculer la position angulaire de chacun des arbres primaire et secondaire par comptage des impulsions reçues.

On notera la vitesse de l'arbre primaire par **V1**, la vitesse de l'arbre secondaire par **V2**, la position de l'arbre primaire par **θ1** et la position de l'arbre secondaire par **θ2.** Toutes ces valeurs évoluent avec le temps **t** lors des mouvements des arbres.

La première unité de surveillance **31** peut comparer les positions et vitesses de rotation des arbres primaire et secondaire **11**, **12** par rapport à des critères de bon fonctionnement prédéterminés qui seront explicités plus loin.

La première unité de surveillance **31** peut alors commander au moins une première sortie **51** en réponse à un dysfonctionnement si les critères de bon fonctionnement ne sont pas respectés. Dans l'exemple illustré, le système de surveillance commande la première sortie **51** dans un état qui correspond à un état de mise en sécurité du système, aussi appelé 'état de sécurité' par la suite.

Dans une logique de 'sécurité positive', la première sortie 51 sera commandée dans un état dit 'activé' si les critères de bon fonctionnement prédéterminés sont respectés et sera commandée dans un état inactif en cas de détection d'un dysfonctionnement. Ainsi, selon la logique en question, un apport d'énergie de commande autorisera le fonctionnement ou le déplacement et une absence d'énergie de commande s'opposera au déplacement.

De plus, par souci de redondance, le système de surveillance comprend une deuxième unité de surveillance **3**2**,** similaire à la première, apte à acquérir les premier et deuxième signaux 41, 42. Grâce à la lecture de ces signaux, la deuxième unité de surveillance **32** peut alors calculer de son côté les positions angulaires des arbres primaire et secondaire par comptage des impulsions reçues, de façon similaire à ce qui a été décrit pour la première unité de surveillance ci-dessus.

La deuxième unité de surveillance **32** peut alors comparer les positions et vitesses de rotation des arbres primaire et secondaire par rapport aux critères de bon fonctionnement prédéterminés déjà mentionnés ci dessus. La deuxième unité de surveillance **32** peut alors commander au moins une deuxième sortie **52** dans état de sécurité si les critères de bon fonctionnement ne sont pas respectés, de façon similaire à la première unité 31.

Les première et deuxième unités de surveillance **31**, **32** peuvent être des automates programmables ou des moniteurs plus spécialisés. On pourra choisir à titre d'exemple un modèle de type 'Motrona' MS640.

Les premier et deuxième capteurs **21**, **22** sont reliés aux unités de surveillance par des conducteurs 67 et 68 (cf. Fig. 1) respectivement selon le schéma de connexion de la figure 2.

Enfin, le système de surveillance comprend un circuit de sortie **33,** apte à acquérir lesdits première et deuxième sorties 51,52. Le circuit de sortie **33** commande au moins une troisième sortie **53** dans un état de mise en sécurité si au moins l'une des première et deuxième sorties 51,52 est en état de sécurité. Cette troisième sortie **53** sera par exemple une sortie dite 'à contact sec' isolée du reste du circuit, le contact étant ouvert, la troisième sortie 53 est en état de mise en sécurité.

On pourra choisir à titre d'exemple un modèle de type 'PNOZ X5' commercialisé par la firme 'PILZ' pour former le circuit de sortie 33.

Le système de surveillance peut aussi comprendre en outre la prise en compte de plusieurs ordres de mouvements **25**, **26**, **27** relatifs à une commande de motorisation de l'arbre primaire. Des entrées représentatives desdits ordres de mouvements 25,26,27 sont acquises par les première et deuxième unités de surveillance 31,32. Ainsi chacune des première et deuxième unités de surveillance 31,32 a connaissance d'un ordre de rotation dans un sens ou dans l'autre (Ctrl1 Ctrl2) sur l'arbre primaire 11.

De plus, chacune des première et deuxième unités de surveillance 31,32 peut avoir connaissance d'une commande de grande vitesse (Ctrl3). De la sorte, les critères de bon fonctionnement prédéterminés pourront comporter la vérification du sens de rotation et l'adaptation de seuils de vitesse à ne pas dépasser, comme il sera précisé dans la suite.

Les critères de bon fonctionnement peuvent par exemple comporter les critères ou conditions qui sont décrites ci-après en regard des dysfonctionnements potentiels correspondants.

### Survitesse

La condition de 'Survitesse' signifie que les arbres primaire et/ou secondaire 11,12 se mettent à tourner avec une vitesse de rotation supérieure à celle qui est normalement attendue. Il peut y avoir plusieurs seuils de vitesse qui représentent chacun une vitesse maximum attendue. On vérifiera donc parmi les critères de bon fonctionnement l'absence de survitesse.

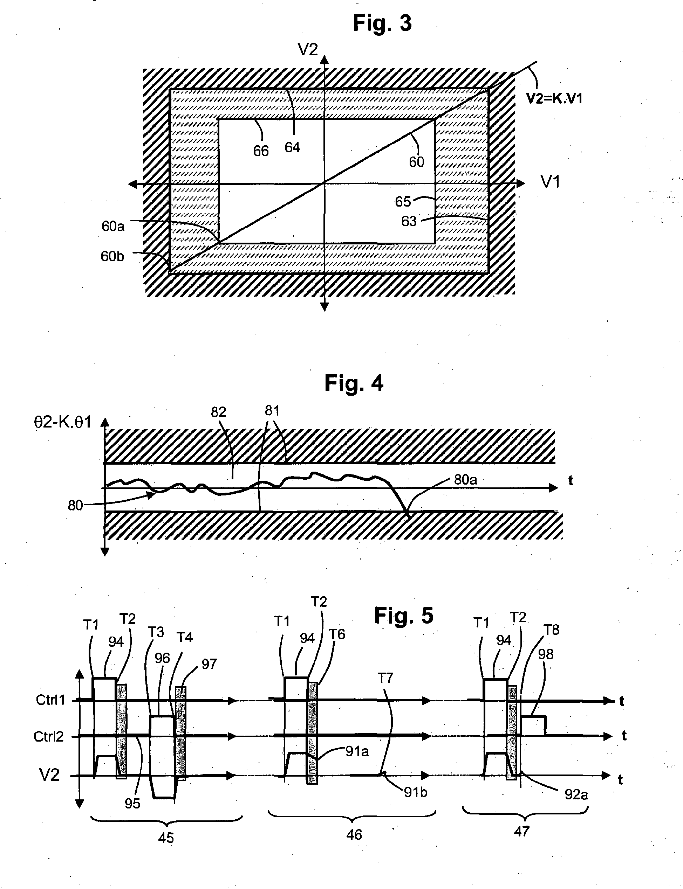

En référence à la Figure 3, en abscisse est représentée la vitesse de rotation V1 de l'arbre primaire 11, tandis qu'en ordonnée est représentée la vitesse de rotation V2 de l'arbre secondaire 12, les échelles des deux axes n'étant pas forcément homogènes. Le diagramme montre que le rapport de transmission, noté K, entre l'arbre primaire et l'arbre secondaire, conduit à la relation **V2** = **K** .**V1**, représentatif du fonctionnement normal de la chaine cinématique et de sa transmission 2.

Un premier seuil de vitesse (repéré par **65** pour V1 et **66** pour V2) peut correspondre par exemple à la vitesse maximum attendue en opération à petite vitesse de la chaine cinématique (par exemple Ctrl3 non actif). Un second seuil de vitesse (repéré par **63** pour V1 et **64** pour V2) peut correspondre par exemple à la vitesse maximum attendue en opération à grande vitesse de la chaine cinématique (par exemple Ctrl3 actif). Dans l'exemple illustré, les seuils sont de signe contraire dans les deux sens de rotation, à savoir V1 et V2 positifs ou V1 et V2 négatifs.

Un exemple de courbe de vitesse est représenté par la courbe **60** sur la figure 3, (la courbe 60 coïncide substantiellement avec la droite V2=K.V1), pour laquelle le premier seuil est franchi au niveau du repère **60a** et le second seuil de vitesse est franchi au niveau du repère **60b.** Lorsqu'une de ces conditions de survitesse est déclarée franchie, les unités de surveillance 31,32 commandent leurs sorties respectives 51,52 et le circuit de sortie 33 commande sa sortie (la troisième sortie 53) dans un état de mise en sécurité. Un dispositif en aval, relié à cette troisième sortie, par exemple un frein ou un système de sécurité en général provoque alors la mise en sécurité de la chaine cinématique. Il est à noter qu'il suffit qu'une seule des unités de surveillance 31,32 commande sa sortie pour conduire à ce résultat.

### Désynchronisme

La condition de 'désynchronisme' signifie que l'évolution des positions angulaires **θ1**, **θ2** des arbres primaire et secondaire n'est plus en cohérence avec le rapport de transmission K de la transmission. Dans un fonctionnement normal, on constate sensiblement l'égalité **θ2** = **K.θ1** (on a aussi V2=K.V1 repéré 60 comme illustré sur la figure 3).

En référence à la Figure 4, en abscisse est représentée le temps et en ordonnée la valeur de θ2-K.θ1, qui en temps normal est voisine de 0 et qui évolue avec le temps come illustré par la courbe **80**.

Si cette valeur θ2-K.θ1 s'éloigne trop de la valeur nulle, et vient à dépasser une valeur seuil illustré par la valeur **81** sur la figure, comme par exemple à l'endroit du repère **80a**, alors la condition de désynchronisme est déclarée par les unités de surveillance 31,32 qui commandent leurs sorties respectives 51,52. Le circuit de sortie 33 commande sa sortie (la troisième sortie 53) dans un état de mise en sécurité.

Le dispositif en aval provoque alors la mise en sécurité de la chaine cinématique comme dans le cas précédent. Il est à noter qu'il suffit qu'une seule des unités de surveillance 31,32 commande sa sortie pour conduire à ce résultat.

La zone de fonctionnement normal 82 est délimitée de chaque coté, positif et négatif, par la valeur seuil 81 déjà mentionnée. On peut donc aussi dire que la condition de désynchronisme est atteinte lorsque la valeur absolue de θ2-K.θ1 dépasse la valeur prédéterminée 81.

Il est à noter que les conditions de survitesse et désynchronisme ne dépendent pas des ordres de mouvement de rotation sur l'arbre primaire, alors que les conditions de dévirage statique et dynamique décrites ci-après utilisent les ordres de mouvement (Ctrl1 Ctrl2) de rotation sur l'arbre primaire.

### Dévirage statique

La condition de dévirage statique signifie que l'arbre secondaire 12 se met à tourner en l'absence de commande de rotation sur l'arbre primaire 11. On vérifiera donc parmi les critères de bon fonctionnement l'absence de dévirage statique.

Une telle rotation inattendue peut intervenir juste après l'interruption d'un ordre de déplacement ou de manière permanente.

Comme illustré à la figure 5, la courbe du haut représente la commande de mouvement selon un premier sens, la courbe du milieu représente la commande de mouvement selon le sens opposé et la courbe du bas représente la vitesse de rotation de l'arbre secondaire 12. La partie de chronogramme repérée **45** correspond à une phase de fonctionnement normal, avec une durée de commande **94** (de T1 à T2) dans le premier sens, puis un arrêt de la commande, une pause **95** (de T2 à T3), puis une durée de commande **96** (de T3 à T4) dans le sens opposé, puis un arrêt de la commande. Après chaque arrêt de commande, une temporisation **97** prend en compte le temps nécessaire pour que la vitesse V2 revienne à 0. Quand ladite temporisation est écoulée, alors la surveillance du dévirage statique est opérationnelle.

La partie de chronogramme repérée **46** correspond à une phase de fonctionnement illustrant la détection de dévirage statique. A l'instant **T6,** lorsque la temporisation **97** est écoulée, la vitesse V2 n'est pas nulle (point repéré 91a), et donc la condition de dévirage statique est déclarée par les unités de surveillance 31,32 qui commandent alors leurs sorties respectives 51,52 à l'état de sécurité.

Un autre exemple est illustré à l'instant **T7,** aucun ordre de mouvement n'a été donné dans les instants précédents, et une rotation est détectée sur l'arbre secondaire (point repéré **91b**). Alors la condition de dévirage statique est déclarée par les unités de surveillance 31,32 qui commandent alors leurs sorties respectives 51,52 à l'état de sécurité. Les unités de surveillance 31,32 utilisent les vitesses V1, V2 mais aussi les positions **θ1**, **θ2**.

### Dévirage dynamique

La condition de dévirage dynamique signifie que l'arbre secondaire 12 se met à tourner dans un sens opposé au sens de commande de rotation sur l'arbre primaire 11. On vérifiera donc parmi les critères de bon fonctionnement l'absence de dévirage dynamique.

La partie de chronogramme repérée **47** correspond à une phase de fonctionnement illustrant la détection de dévirage dynamique. Après un début de séquence similaire à la séquence normale, à l'instant **T8**, lorsque la commande **98** intervient, la vitesse V2 s'écarte de 0 avec des valeurs de signe opposé à celui qui est attendu (point repéré **92a**). Alors la condition de dévirage dynamique est déclarée par les unités de surveillance 31,32 qui commandent alors leurs sorties respectives 51,52 à l'état de sécurité.

Les unités de surveillance 31,32 utilisent les vitesses V1, V2 mais aussi les positions **θ1**, **θ2**.

Il est à noter que à partir de la surveillance des positions et des vitesses, on obtient des temps de réponse performants pour déclarer un dysfonctionnement, par exemple des temps de réponse inférieurs à 100 ms.

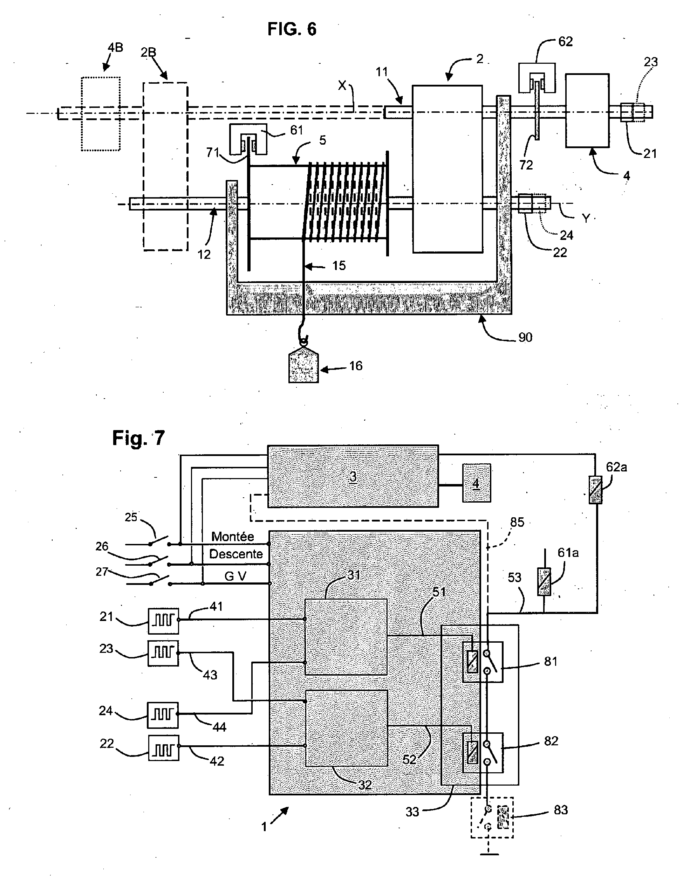

De façon optionnelle, comme illustré à la Figure 7, le système de surveillance peut comprendre en outre un troisième capteur **23** en redondance avec le premier capteur 21 et un quatrième capteur **24** en redondance avec le deuxième capteur 22.

Ce troisième capteur 23 est apte à délivrer un signal 43 représentatif de la vitesse et du sens de rotation de l'arbre primaire, formant un signal redondant du premier signal 41 représentatif de la vitesse et du sens de rotation de l'arbre primaire et qui est lu par la deuxième unité de surveillance 32.

Les signaux 41,43 forment ainsi des premiers signaux représentatifs de la vitesse et du sens de rotation de l'arbre primaire 11.

Le quatrième capteur 24 est apte à délivrer un signal 44 représentatif de la vitesse et du sens de rotation de l'arbre secondaire, formant un signal redondant du deuxième signal 42 représentatif de la vitesse et du sens de rotation de l'arbre secondaire et qui est lu par la première unité de surveillance 31.

Les signaux 42,44 forment ainsi des deuxièmes signaux représentatifs de la vitesse et du sens de rotation de l'arbre secondaire 12.

Il s'ensuit qu'une défaillance d'un des capteurs 21-24 peut être tolérée sans que cela affecte la fonction du système de surveillance. En conséquence de quoi, une défaillance d'un des capteurs 21-24 ne dégrade pas la fonction de surveillance du système.

Il est à noter que le schéma des capteurs redondants de la figure 7 peut s'appliquer au système de surveillance de la figure 2.

En référence à la Figure 6, il est présenté un système de treuil pour la manutention de charges, adapté pour soulever une charge **16** au moyen d'un câble **15**. Une extrémité du câble est accrochée à la charge 16 à lever, tandis que l'autre extrémité du câble est relié au tambour **5** sur lequel peut s'enrouler une portion du câble.

Par ailleurs, le système de treuil comprend une chaine cinématique telle que décrite précédemment, notamment un support **90**, constituant le bâti du système de treuil, un arbre primaire **11** (appelé ici arbre 'rapide') pivotant autour d'un axe **X**, un arbre secondaire **12** (appelé ici arbre 'lent') pivotant autour d'un axe **Y**, le tambour 5 susmentionné étant fixé à l'arbre secondaire 12.

Par ailleurs, le système de treuil comprend au moins un dispositif de frein 61,62 apte à agir sur au moins un organe de frein 71,72 lié à l'arbre primaire 11 ou à l'arbre secondaire 12.

En l'occurrence, dans l'exemple illustré, le dispositif de frein en question comprend un premier dispositif de frein **61** apte à agir sur un premier organe de frein **71** lié au tambour et solidaire du tambour en rotation, ledit premier organe de frein 71 étant ici un disque de frein comme connu dans l'art.

Un dispositif d'entrainement, monté sur le support 90, est prévu pour entrainer l'arbre primaire 11 en rotation. Ce dispositif d'entrainement comprend un organe moteur **4** de préférence de type moteur électrique asynchrone.

Selon un aspect avantageux, l'arbre primaire (rapide) 11 peut comprendre un deuxième organe de frein 72, dans l'exemple représenté sous la forme d'un disque de frein. Un deuxième dispositif de frein 62 est agencé en vis-à-vis de ce deuxième organe de frein 72 et est apte à agir sur lui.

Le premier dispositif de frein 61, tout comme le deuxième dispositif de frein 62 lorsqu'il est présent, peuvent se présenter comme un étrier à mâchoires mobiles pourvu de plaquettes de friction. Le déplacement des mâchoires est commandé de préférence électriquement, bien qu'une commande hydraulique ou autre peut être tout aussi bien envisagée.

De préférence et de manière avantageuse selon le principe de sécurité positive, les mâchoires serrent le disque en vis-à-vis lorsque un courant de commande faible ou nul est appliqué, ce qui est appelé dans le métier un frein à manque de courant.

Il peut y avoir, sans que cela ne soit nécessaire à la réalisation de la présente invention, un second dispositif d'entrainement comprenant une transmission 2B auquel cas on parle de 'système fermé'. Il peut y avoir aussi le cas échéant un deuxième moteur 4B.

La Figure 7 illustre un schéma du système de surveillance 1 mis en oeuvre dans le système de treuil illustré sur la figure 6. Le schéma présenté étant similaire à celui de la figure 2, les éléments communs ne seront pas décrits à nouveau.

Un circuit de commande 3 acquiert les ordres de mouvements 25,26,27 et pilote l'organe moteur 4.

Concernant les ordres de mouvements 25,26,27, deux ordres de base 'Ctrl1' et 'Ctrl2' correspondent respectivement aux ordres de 'Montée' et 'Descente'. En outre, le troisième ordre de mouvement 27 correspond à un changement de consigne de vitesse (par exemple une commande de grande vitesse 'G.V').

La première sortie 51 est connectée à un premier relais **81** faisant partie du circuit de sortie 33.

La deuxième sortie 52 est connectée à un deuxième relais **82** faisant aussi partie du circuit de sortie 33. Les sorties 'contacts secs' des premier et deuxième relais 81,82 sont raccordées en mode série pour donner une troisième sortie 53. Cette troisième sortie 53 commande l'organe magnétique **61a** du premier dispositif de frein 61 et commande simultanément l'organe magnétique **62a** du second dispositif de frein 62 notamment afin de sauvegarder l'intégrité mécanique de la transmission 2. En effet, l'inertie du rotor du moteur 4 peut être relativement importante et l'activation du deuxième dispositif de frein 62 permet de dissiper l'énergie cinétique du rotor.

Il peut y avoir en outre un troisième relais 83 disposé en série sur le circuit de sortie, en provenance d'un circuit d'arrêt d'urgence par exemple.

Un signal 85 dérivé de la troisième sortie peut informer le circuit de commande **3** du déclenchement de la sécurité. Un réarmement sera nécessaire pour remettre en service le treuil après un déclenchement de la sécurité.

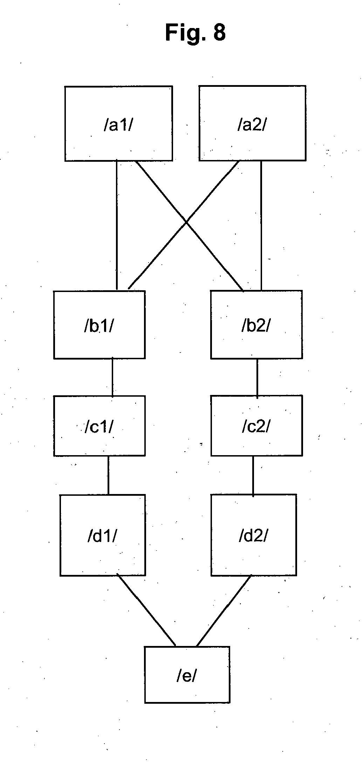

La figure 8 illustre un procédé mis en oeuvre pour surveiller une chaine cinématique telle que décrite plus haut. Le procédé comprend les étapes suivantes:
**/a1/** délivrer, au niveau du premier capteur, au moins un des premiers signaux 41;43 représentatif de la vitesse et du sens de rotation de l'arbre primaire 11,
**/a2/** délivrer, au niveau du deuxième capteur, au moins un des deuxièmes signaux 42;44 représentatif de la vitesse et du sens de rotation de l'arbre secondaire 12,
**/b1/** acquérir, au niveau de la première unité de surveillance 31 au moins deux des premier et deuxième signaux 41,42;44, et calculer les positions angulaires des arbres primaire et secondaire,
**/c1/** comparer, dans la première unité de surveillance 31, les positions et vitesses de rotation des arbres primaire et secondaire par rapport à des critères de bon fonctionnement prédéterminés,
**/d1/** commander, par la première unité de surveillance 31, au moins une première sortie 51 dans un état de sécurité si les critères de bon fonctionnement ne sont pas respectés,
**/b2/** acquérir, au niveau de la deuxième unité de surveillance 32 au moins deux des premier et deuxième signaux 41;43,42, et calculer les positions angulaires des arbres primaire et secondaire,
**/c2/** comparer dans la deuxième unité de surveillance 32, les positions et vitesses de rotation des arbres primaire et secondaire par rapport à des critères de bon fonctionnement prédéterminés,
**/d2/** commander, par la deuxième unité de surveillance 32, au moins une deuxième sortie 52 dans un état de sécurité si les critères de bon fonctionnement ne sont pas respectés.
**/e/** commander au moins une troisième sortie 53 dans un état de mise en sécurité si au moins l'une des première et deuxième sorties 51,52 est dans un état de sécurité.

Il est à noter que les étapes /a1/ et /a2/ peuvent être réalisées en parallèle. De même, la branche des étapes /b1/-/c1/-/d1/ peut être réalisée en parallèle de la branche des étapes /b2/-/c2/-/d2/.

Les critères de bon fonctionnement prédéterminés correspondent à ceux décrits précédemment avec leurs raffinements éventuels. En particulier, tout comme décrit précédemment, la comparaison effectuée aux étapes /c1/ et /c2/ peut prendre en compte, notamment pour le dévirage statique et le dévirage dynamique, les ordres de mouvements 25,26,27 relatifs à la commande de motorisation de l'arbre primaire.

## Revendications

1. Système de surveillance (1) pour surveiller une chaine cinématique comprenant un support (90), un arbre primaire (11) monté pivotant sur le support autour d'un premier axe (X), un arbre secondaire (12) monté pivotant sur le support autour d'un second axe (Y) et au moins une transmission (2) reliant l'arbre primaire à l'arbre secondaire, le système de surveillance comprenant :
- au moins un premier capteur (21) apte à délivrer au moins un des premiers signaux (41;43) représentatifs au moins de la vitesse et du sens de rotation de l'arbre primaire,
- au moins un deuxième capteur (22) apte à délivrer au moins un des deuxièmes signaux (42;44) représentatifs au moins de la vitesse et du sens de rotation de l'arbre secondaire,
- une première unité de surveillance (31) apte à acquérir au moins deux des premier et deuxième signaux (41,42;44), apte à calculer les positions angulaires des arbres primaire et secondaire et à comparer les positions, vitesses et sens de rotation des arbres primaire et secondaire par rapport à des critères de bon fonctionnement prédéterminés et apte à commander au moins une première sortie (51) dans un état de sécurité si les critères de bon fonctionnement ne sont pas respectés,
- une deuxième unité de surveillance (32) apte à acquérir au moins deux des premier et deuxième signaux (42,41;43), apte à calculer les positions angulaires des arbres primaire et secondaire et à comparer les positions et vitesses de rotation des arbres primaire et secondaire par rapport aux critères de bon fonctionnement prédéterminés et apte à commander au moins une deuxième sortie (52) dans un état de sécurité si les critères de bon fonctionnement ne sont pas respectés,
- un circuit de sortie (33), apte à acquérir lesdits première et deuxième sorties et à commander au moins une troisième sortie (53) dans un état de mise en sécurité si au moins l'une des première et deuxième sorties (51,52) est en état de sécurité, de sorte que la chaine cinématique peut être mise en état de sécurité si un dysfonctionnement de la transmission a été détecté.

2. Système de surveillance selon la revendication 1, dans lequel un dysfonctionnement de la chaine cinématique est déclaré en cas de dépassement d'au moins un seuil de vitesse prédéterminé sur l'arbre primaire ou secondaire, et/ou en cas désynchronisme des positions entre l'arbre primaire et l'arbre secondaire.

3. Système de surveillance selon l'une des revendications 1 à 2, dans lequel la transmission (2) présente un rapport de transmission noté K, dans lequel la position angulaire de l'arbre primaire est notée θ1, la position angulaire de l'arbre secondaire est notée θ2, et dans lequel un désynchronisme est détecté si la valeur absolue de θ2-K.θ1 dépasse une valeur prédéterminée.

4. Système de surveillance selon l'une des revendications 1 à 3, dans lequel les première et deuxième unités de surveillance (31,32) sont aptes à acquérir des ordres de mouvements (25,26,27) relatifs à une commande de motorisation de l'arbre primaire, et dans lequel un dysfonctionnement de la chaine cinématique est déclaré en cas de dévirage statique, et/ou de dévirage dynamique.

5. Système de surveillance selon l'une des revendications 1 à 4, dans lequel les critères de bon fonctionnement prédéterminés sont basés sur au moins une table de paramètres représentant des caractéristiques de la chaine cinématique, ladite table de paramètres étant apte à être chargée par un utilisateur dans les première et deuxième unités de surveillance (31,32).

6. Système de surveillance selon la revendication 1, comprenant en outre un troisième capteur (23) apte à délivrer un autre des premiers signaux (43) représentatif de la vitesse et du sens de rotation de l'arbre primaire et lu par la deuxième unité de surveillance (32), et un quatrième capteur (24) apte à délivrer un autre des deuxièmes signaux (44) représentatif de la vitesse et du sens de rotation de l'arbre secondaire, et lu par la première unité de surveillance (31), de sorte qu'une défaillance d'un des capteurs (21-24) ne dégrade pas la fonction de surveillance du système.

7. Système de treuil pour la manutention de charges, comprenant une chaine cinématique comprenant un support (90), un arbre primaire (11) monté pivotant sur le support autour d'un premier axe (X), un arbre secondaire (12) monté pivotant sur le support autour d'un second axe (Y), au moins une transmission (2) reliant l'arbre primaire à l'arbre secondaire, et un système de surveillance selon l'une des revendications 1 à 6,
et comprenant en outre:
- un organe moteur (4) accouplé à l'arbre primaire (11),
- un tambour (5) accouplé audit arbre secondaire, ledit tambour étant destiné à recevoir au moins un câble (15) de traction, dont une extrémité est attachée au tambour et l'autre extrémité pouvant être accrochée à une charge (16) à lever,
- au moins un dispositif de frein (61,62) apte à agir sur au moins un organe de frein (71,72) lié à l'arbre primaire ou à l'arbre secondaire (12),
la troisième sortie (53) étant configurée pour commander le dispositif de frein (61,62) à agir en cas de dysfonctionnement de la chaine cinématique.

8. Système de treuil selon la revendication 7, dans lequel le dispositif de frein (61,62) comprend un premier dispositif de frein (61) apte à agir sur un premier organe de frein (71) lié à l'arbre secondaire (12) et un deuxième dispositif de frein (62) apte à agir sur un deuxième organe de frein (72) lié à l'arbre primaire (11), dans lequel la troisième sortie (53) est apte à commander simultanément le premier dispositif de frein (61) et le deuxième dispositif de frein (62).

9. Procédé pour surveiller une chaine cinématique comprenant un arbre primaire (11) monté pivotant, un arbre secondaire (12) monté pivotant, une transmission (2) reliant l'arbre primaire à l'arbre secondaire, et un système de surveillance comprenant :
- au moins un premier capteur (21) agencé sur l'arbre primaire,
- au moins un deuxième capteur (22) agencé sur l'arbre secondaire,
- une première unité de surveillance (31),
- une deuxième unité de surveillance (32),
- un circuit de sortie (33),
le procédé comprenant les étapes :
**/a1/** délivrer, au niveau du premier capteur, au moins un des premiers signaux (41;43) représentatif de la vitesse et du sens de rotation de l'arbre primaire,
**/a2/** délivrer, au niveau du deuxième capteur, au moins un des deuxièmes signaux (42;44) représentatif de la vitesse et du sens de rotation de l'arbre secondaire,
**/b1/** acquérir, au niveau de la première unité de surveillance (31) au moins deux des premier et deuxième signaux (41,42;44), et calculer les positions angulaires des arbres primaire et secondaire,
**/c1/** comparer, dans la première unité de surveillance (31), les positions et vitesses de rotation des arbres primaire et secondaire par rapport à des critères de bon fonctionnement prédéterminés,
**/d1/** commander, par la première unité de surveillance (31), au moins une première sortie (51) dans un état de sécurité si les critères de bon fonctionnement ne sont pas respectés,
**/b2/** acquérir, au niveau de la deuxième unité de surveillance (32) au moins deux des premier et deuxième signaux (41;43,42), et calculer les positions angulaires des arbres primaire et secondaire,
**/c2/** comparer dans la deuxième unité de surveillance (32), les positions et vitesses de rotation des arbres primaire et secondaire par rapport à des critères de bon fonctionnement prédéterminés,
**/d2/** commander, par la deuxième unité de surveillance (32), au moins une deuxième sortie (52) dans un état de sécurité si les critères de bon fonctionnement ne sont pas respectés.
**/e/** commander au moins une troisième sortie (53) dans un état de mise en sécurité si au moins l'une des première et deuxième sorties (51,52) est dans un état de sécurité.

10. Procédé selon la revendication 9, dans lequel, aux étapes /d1/ et/ou /d2/, un dysfonctionnement de la chaine cinématique est déclaré en cas de dépassement d'au moins un seuil de vitesse prédéterminé sur l'arbre primaire ou secondaire, et/ou en cas de désynchronisme des positions entre l'arbre primaire et l'arbre secondaire.

11. Procédé selon l'une des revendications 9 ou 10, dans lequel les première et deuxième unités de surveillance (31,32) acquièrent en outre des ordres de mouvements (25,26,27) relatifs à une commande de motorisation l'arbre primaire, de sorte qu'un dysfonctionnement de la chaine cinématique est déclaré en cas de dévirage statique, et/ou de dévirage dynamique.

## Patentansprüche

1. Überwachungssystem (1) zum Überwachen einer kinematischen Kette, wobei
die kinematische Kette aufweist: einen Träger (90), eine primäre Welle (11), die um eine erste Achse (X) drehbar an dem Träger angebracht ist, eine sekundäre Welle (12), die um eine zweite Achse (Y) drehbar an dem Träger angebracht ist, und mindestens ein die primäre Welle mit der sekundären Welle verbindendes Getriebe (2), und
das Überwachungssystem aufweist:
- mindestens einen ersten Sensor (21) zur Bereitstellung mindestens eines von ersten Signalen (41;43), die mindestens die Drehzahl und die Drehrichtung der primären Welle repräsentieren,
- mindestens einen zweiten Sensor (22) zur Bereitstellung mindestens eines von zweiten Signalen (42;44), die mindestens die Drehzahl und die Drehrichtung der sekundären Welle repräsentieren,
- eine erste Überwachungseinheit (31) zum Empfangen von mindestens zwei der ersten und zweiten Signale (41,42;44), zum Berechnen der Winkelpositionen der primären und sekundären Welle und zum Vergleichen der Positionen, Drehzahlen und Drehrichtungen der primären und sekundären Welle mit vorgegebenen Kriterien für einen ordnungsgemäßen Betrieb (vorgegebenen Betriebskriterien) und zum Setzen mindestens eines ersten Ausgabesignals (51) in einen Sicherheitszustand im Fall der Nichterfüllung der vorgegebenen Betriebskriterien,
- eine zweite Überwachungseinheit (32) zum Empfangen von mindestens zwei der ersten und zweiten Signale (42,41;43), zum Berechnen der Winkelpositionen der primären und sekundären Welle und zum Vergleichen der Positionen und der Drehzahlen der primären und sekundären Welle mit vorgegebenen Betriebskriterien und zum Setzen mindestens eines zweiten Ausgabesignals (52) in einen Sicherheitszustand im Fall der Nichterfüllung der vorgegebenen Betriebskriterien,
- eine Ausgabeschaltung (33) zum Empfangen des ersten und zweiten Ausgabesignals und zum Setzen mindestens eines dritten Ausgabesignals (53) in einen Sicherheitszustand in dem Fall, dass das erste und/oder zweite Ausgabesignal (51,52) in einem Sicherheitszustand ist, so dass die kinematische Kette in einen Sicherheitszustand (sicheren Zustand) gebracht werden kann, falls eine Funktionsstörung des Getriebes detektiert worden ist.

2. Überwachungssystem nach Anspruch 1, wobei im Fall einer Überschreitung mindestens eines vorgegebenen Geschwindigkeitsschwellenwerts an der primären oder sekundären Welle und/oder im Fall eines Auftretens asynchroner Positionen zwischen der primären Welle und der sekundären Welle eine Funktionsstörung der kinematischen Kette erklärt wird.

3. Überwachungssystem nach einem der Ansprüche 1 bis 2, wobei das Getriebe (2) ein Übersetzungsverhältnis K aufweist, θ1 eine Winkelposition der primären Welle und θ2 eine Winkelposition der sekundären Welle bezeichnet, und wobei eine Asynchronität (Gleichlaufstörung) detektiert ist, wenn der Absolutwert von θ2-K*θ1 einen vorgegebenen Wert überschreitet.

4. Überwachungssystem nach einem der Ansprüche 1 bis 3, wobei die erste und die zweite Überwachungseinheit (31,32) Bewegungsbefehle (25,26,27), die eine Antriebssteuerung der primären Welle betreffen, empfangen können und wobei im Fall einer statischen Fehldrehung und/oder dynamischen Fehldrehung eine Funktionsstörung der kinematischen Kette erklärt wird.

5. Überwachungssystem nach einem der Ansprüche 1 bis 4, wobei die vorgegebenen Betriebskriterien auf mindestens einer Tabelle von Parametern, die Merkmale der kinematischen Kette repräsentieren, basieren, wobei die Tabelle von einem Benutzer in die erste und zweite Überwachungseinheit (31,32) geladen werden kann.

6. Überwachungssystem nach Anspruch 1, außerdem mit einem dritten Sensor (23), der ein zusätzliches erstes Signal (43) bereitstellen kann, das die Drehzahl und die Drehrichtung der primären Welle repräsentiert und von der zweiten Überwachungseinheit (32) gelesen (empfangen) wird, und mit einem vierten Sensor (24), der ein zusätzliches zweites Signal (44) bereitstellen kann, das die Drehzahl und die Drehrichtung der sekundären Welle repräsentiert und von der ersten Überwachungseinheit (31) gelesen (empfangen) wird, so dass ein Versagen eines der Sensoren (21 bis 24) die Funktion (den ordnungsgemäßen Betrieb) des Überwachungssystems nicht beeinträchtigt.

7. Seilwinde-System zum Handhaben von Lasten, das aufweist:
- eine kinematische Kette, die einen Träger (90), eine primäre Welle (11), die um eine erste Achse (X) drehbar an dem Träger angebracht ist, eine sekundäre Welle (12), die um eine zweite Achse (Y) drehbar an dem Träger angebracht ist, mindestens ein die primäre Welle mit der sekundären Welle verbindendes Getriebe (2), und ein Überwachungssystem nach einem der Ansprüche 1 bis 6,
und außerdem:
- ein an die primäre Welle (11) gekoppeltes Antriebselement (4),
- eine an die sekundäre Welle (12) gekoppelte Seiltrommel (5) zur Aufnahme mindestens eines Zugseils (15), ein Ende dessen an der Seiltrommel befestigt ist und das andere Ende dessen an einer zu hebenden Last (16) zu befestigen ist,
- mindestens eine Bremsvorrichtung (61,62) zum Einwirken auf mindestens ein Bremselement (71,72), das mit der primären Welle (11) oder der sekundären Welle (12) operativ verbunden ist,
wobei das dritte Ausgabesignal (53) konfiguriert ist, im Fall einer Funktionsstörung der kinematischen Kette die Bremsvorrichtung (61,62) zu aktivieren.

8. Seilwinde-System nach Anspruch 7, wobei die Bremsvorrichtung (61,62) eine erste Bremsvorrichtung (61) zum Einwirken auf ein operativ mit der sekundären Welle (12) verbundenes erstes Bremselement (71) und eine zweite Bremsvorrichtung (62) zum Einwirken auf ein operativ mit der primären Welle (11) verbundenes zweites Bremselement (72) aufweist und wobei das dritte Ausgabesignal (53) gleichzeitig die erste Bremsvorrichtung (61) und die zweite Bremsvorrichtung (62) steuern kann.

9. Verfahren zum Überwachen einer kinematischen Kette, die eine drehbar angebrachte primäre Welle (11), eine drehbar angebrachte sekundäre Welle (12), ein die primäre Welle mit der sekundären Welle verbindendes Getriebe (2) aufweist und wobei ein Überwachungssystem aufweist:
- mindestens einen ersten Sensor (21) an der primären Welle,
- mindestens einen zweiten Sensor (22) an der sekundären Welle,
- eine erste Überwachungseinheit (31),
- eine zweite Überwachungseinheit (32),
- eine Ausgabeschaltung (33),
wobei das Verfahren die folgenden Schritte aufweist:
/a1/ Bereitstellen mindestens eines von ersten Signalen (41;43), das die Drehzahl und die Drehrichtung der primären Welle repräsentiert, an dem ersten Sensor,
/a2/ Bereitstellen mindestens eines von zweiten Signalen (42;44), das die Drehzahl und die Drehrichtung der sekundären Welle repräsentiert, an dem zweiten Sensor,
/b1/ Empfangen von mindestens zwei der ersten und zweiten Signale (41,42;44) an der ersten Überwachungseinheit (31) und Berechnen der Winkelpositionen der primären und sekundären Welle,
/c1/ Vergleichen der Positionen und Drehzahlen der primären und sekundären Welle mit vorgegebenen Betriebskriterien (vorgegebenen Kriterien für einen ordnungsgemäßen Betrieb) in der ersten Überwachungseinheit (31),
/d1/ Setzen mindestens eines ersten Ausgabesignals (51) in den Sicherheitszustand durch die erste Überwachungseinheit (31) im Fall einer Nichterfüllung der vorgegebenen Betriebskriterien,
/b2/ Empfangen von mindestens zwei der ersten und zweiten Signale (41; 42,43) an der zweiten Überwachungseinheit (32) und Berechnen der Winkelpositionen der primären und sekundären Welle,
/c2/ Vergleichen der Positionen und Drehzahlen der primären und sekundären Welle mit vorgegebenen Betriebskriterien in der zweiten Überwachungseinheit (32),
/d2/ Setzen mindestens eines zweiten Ausgabesignals (52) in den Sicherheitszustand durch die zweite Überwachungseinheit (32) im Fall einer Nichterfüllung der vorgegebenen Betriebskriterien,
/e/ Setzen mindestens eines dritten Ausgabesignals (53) in den Sicherheitszustand, falls das erste und/oder zweite Ausgabesignal (51,52) in dem Sicherheitszustand ist.

10. Verfahren nach Anspruch 9, wobei in dem Schritt /d1/ und/oder /d2/ im Fall eines Überschreitens mindestens eines vorgegebenen Geschwindigkeitsschwellenwerts an der primären oder sekundären Welle und im Fall eines Auftretens asynchroner Positionen zwischen der primären Welle und der sekundären Welle eine Funktionsstörung der kinematischen Kette erklärt wird.

11. Verfahren nach einem der Ansprüche 9 oder 10, wobei die erste und die zweite Überwachungseinheit (31,32) außerdem Bewegungsanweisungen (25,26,27), die eine Antriebssteuemng der primären Welle betreffen, empfangen, so dass im Fall einer statischen Fehldrehung und/oder dynamischen Fehldrehung eine Funktionsstörung der kinematischen Kette erklärt wird.

## Claims

1. Monitoring system (1) for monitoring a kinematic chain comprising a support (90), a primary shaft (11) mounted on the support so as to pivot about a first axis (X), a secondary shaft (12) mounted on the support so as to pivot about a second axis (Y) and at least one transmission (2) connecting the primary shaft to the secondary shaft, the monitoring system comprising:
- at least one first sensor (21) configured to supply at least one of first signals (41; 43) representing at least the speed and direction of rotation of the primary shaft,
- at least one second sensor (22) configured to supply at least one of second signals (42; 44) representing at least the speed and direction of rotation of the secondary shaft,
- a first monitoring unit (31) configured to acquire at least two of the first and second signals (41, 42; 44), configured to calculate the angular positions of the primary and secondary shafts and compare the positions, speeds and directions of rotation of the primary and secondary shafts with predetermined correct operation criteria and configured to operate at least one first output (51) in a safe state if the correct operation criteria are not met,
- a second monitoring unit (32) configured to acquire at least two of the first and second signals (42, 41; 43), configured to calculate the angular positions of the primary and secondary shafts and compare the positions and speeds of rotation of the primary and secondary shafts with the predetermined correct operation criteria and configured to operate at least one second output (52) in a safe state if the correct operation criteria are not met,
- an output circuit (33), configured to acquire said first and second outputs and to operate at least one third output (53) in a fail safe state if at least one of the first and second outputs (51, 52) is in a safe state, so that the kinematic chain can be placed in a safe state if a malfunction of the transmission has been detected.

2. Monitoring system as claimed in claim 1, wherein a malfunction of the kinematic chain is declared if at least one predetermined speed threshold is exceeded on the primary or secondary shaft, and/or in the event of desynchronization of the positions between the first shaft and the secondary shaft.

3. Monitoring system as claimed in one of claims 1 to 2, wherein the transmission (2) has a transmission ratio denoted by K, wherein the angular position of the primary shaft is denoted by θ1, the angular position of the secondary shaft is denoted by θ2, and wherein a desynchronization is detected if the absolute value of θ2-K.θ1 exceeds a predetermined value.

4. Monitoring system as claimed in one of claims 1 to 3, wherein the first and second monitoring units (31, 32) are configured to acquire movement controls (25, 26, 27) relating to a motorisation command of the primary shaft, and wherein a malfunction of the kinematic chain is declared in the event of static drift and/or dynamic drift.

5. Monitoring system as claimed in one of claims 1 to 4, wherein the predetermined correct operation criteria are based on at least one table of parameters representing characteristics of the kinematic chain, said table of parameters being configured to be loaded by the users in the first and second monitoring units (31, 32).

6. Monitoring system as claimed in claim 1, further comprising a third sensor (23) configured to supply another of the first signals (43) representing the speed and direction of rotation of the primary shaft and read by the second monitoring unit (32), and a fourth sensor (24) configured to supply another of the second signals (44) representing the speed and direction of rotation of the secondary shaft and read by the first monitoring unit (31) so that a failure of one of the sensors (21-24) does not adversely affect operation of the monitoring system.

7. Winch system for handling loads, comprising a kinematic chain comprising a support (90), a primary shaft (11) mounted on the support so as to pivot about a first axis (X), a secondary shaft (12) mounted on the support so as to pivot about a second axis (Y) and at least one transmission (2) connecting the primary shaft to the secondary shaft, and a monitoring system as claimed in one of claims 1 to 6,
and further comprising:
- a motor element (4) coupled with the primary shaft (11),
- a drum (5) coupled with said secondary shaft, said drum being designed to receive at least one traction cable (15), one end of which is attached to the drum and the other end of which can be hooked to a load (16) to be lifted,
- at least one brake device (61, 62) configured to act on at least one brake element (71, 72) connected to the primary shaft or to the secondary shaft (12),
the third output (53) being configured to command the brake device (61, 62) to act in the event of malfunction of the kinematic chain.

8. Winch system as claimed in claim 7, wherein the brake device (61, 62) comprises a first brake device (61) configured to act on a first brake element (71) connected to the secondary shaft (12) and a second brake device (62) configured to act on a second brake element (72) connected to the primary shaft (11), wherein the third output (53) is configured to control the first brake device (61) and the second brake device (62) simultaneously.

9. Method of monitoring a kinematic chain comprising a primary shaft (11) mounted so as to pivot, a secondary shaft (12) mounted so as to pivot, a transmission (2) connecting the primary shaft to the secondary shaft, and a monitoring system, comprising:
- at least one first sensor (21) disposed on the primary shaft,
- at least one second sensor (22) disposed on the secondary shaft,
- a first monitoring unit (31),
- a second monitoring unit (32),
- an output circuit (33),
the method comprising the steps:
/a1/ supplying, at the level of the first sensor, at least one of first signals (41; 43) representing the speed and direction of rotation of the primary shaft,
**/a2/** supplying, at the level of the second sensor, at least one of second signals (42; 44) representing the speed and direction of rotation of the secondary shaft,
**/b1/** acquiring, at the level of the first monitoring unit (31), at least two of the first and second signals (41, 42; 44) and calculating the angular positions of the primary and secondary shafts,
**/c1/** comparing, in the first monitoring unit (31), the positions and speeds of rotation of the primary and secondary shafts with predetermined correct operation criteria,
**/d1/** operating, by means of the first monitoring unit (31), at least one first output (51) in a safe state if the correct operation criteria are not met,
**/b2/** acquiring, at the level of the second monitoring unit (32), at least two of the first and second signals (41; 43, 42) and calculating the angular positions of the primary and secondary shafts,
**/c2/** comparing, in the second monitoring unit (32), the positions and speeds of rotation of the first and secondary shafts with predetermined correct operation criteria,
**/d2/** operating, by means of the second monitoring unit (32), at least one second output (52) in a safe state if the correct operation criteria are not met,
**/e/** operating at least one third output (53) in a fail safe state if at least one of the first and second outputs (51, 52) is in a safe state.

10. Method as claimed in claim 9, wherein at steps /d1/ and/or /d2/, a malfunction of the kinematic chain is declared if at least one predetermined threshold speed has been exceeded on the primary or secondary shaft, and/or if there is desynchronization of the positions between the primary and secondary shafts.

11. Method as claimed in one of claims 9 or 10, wherein the first and second monitoring units (31, 32) additionally acquire movement commands (25, 26, 27) relating to a primary shaft motorisation command so that a malfunction of the kinematic chain is declared in the event of static drift and/or dynamic drift.
